# EUROPÄISCHE PATENTSCHRIFT

(11) **EP 0 436 461 B1**
(45) Veröffentlichungstag und Bekanntmachung des Hinweises auf die Patenterteilung: **08.03.1995**
(21) Anmeldenummer: 90810011.8
(22) Anmeldetag: 05.01.1990
(51) Int. Cl.: F16F 9/08

(54) **Hydraulischer Stossdämpfer für die Industrie**
Hydraulic chock absorber for the industry
Amortisseur de chocs hydraulique pour l'industrie

(43) Veröffentlichungstag der Anmeldung: 10.07.1991
(73) Patentinhaber: AFAG A.G. für automatische Fertigungstechnik, CH-4950 Huttwil (CH)
(72) Erfinder: Heiniger, Werner, CH-4936 Kleindietwil (CH)
(74) Vertreter: Seehof, Michel

(56) Entgegenhaltungen:
- CH-A- 371 965
- DE-A- 2 944 831
- DE-U- 8 703 195
- FR-A- 1 372 780
- FR-A- 2 238 871
- FR-A- 2 581 724
- GB-A- 2 178 132
- US-A- 4 452 437

## Beschreibung

Die vorliegende Erfindung bezieht sich auf einen hydraulischen Stossdämpfer für die Industrie gemäss Oberbegriff des Anspruchs 1.

Ein derartiger Stossdämpfer ist aus der FR-A-1 372 780 bekannt. Die Drosselnadel weist drei relativ lange prismatische Abschnitte abgestuften Querschnitts auf die durch kurze Uebergangszonen gleicher Gestaltung verbunden sind. Dieser Stossdämpfer weist daher eine unstetige Charakteristik auf, indem jeweils beim Eintritt eines Abschnitts grösseren bzw. kleineren Querschnitts in die Drosselblende eine schlagartige Aenderung des Durchflusswiderstandes und somit der vom Stossdämpfer aufgenommenen Kraft bzw. der bewirkten Verzögerung auftritt.

Es ist zwar auch bekannt, die Drosselnadel aus Abschnitten aufzubauen, die teils zylindrisch sind, teils gleiche Konizität aufweisen (FR-A-2 581 724). Es ist ebenfalls bekannt, Drosselnadeln mit einem einfachen, geschliffenen Konus zu versehen (US-A-4 452 437). In keinem Falle wird jedoch eine optimale Charakteristik des Stossdämpfers erzielt.

Der vorliegenden Erfindung liegt die Aufgabe zugrunde, einen Stossdämpfer anzugeben, der eine optimale, stetig verlaufende Charakteristik aufweist. Diese Aufgabe wird gemäss dem Kennzeichen des Anspruchs 1 gelöst. Vorzugsweise sind mindestens drei bis fünf konische Abstufungen vorgesehen, was einerseits eine genügend stetige Charakteristik ergibt, andererseits auch eine relativ einfache Fabrikation erlaubt.

Die Erfindung wird im folgenden anhand einer Zeichnung eines Ausführungsbeispiels näher erläutert.
- Figur 1: zeigt einen Längsschnitt des erfindungsgemässen hydraulischen Stossdämpfers,
- Figur 2: zeigt im vergrösserten Massstab die Drosselnadel und
- Figur 3: zeigt, im vergrösserten Massstab, die Mittel zur Kompensation des Oelvolumens.

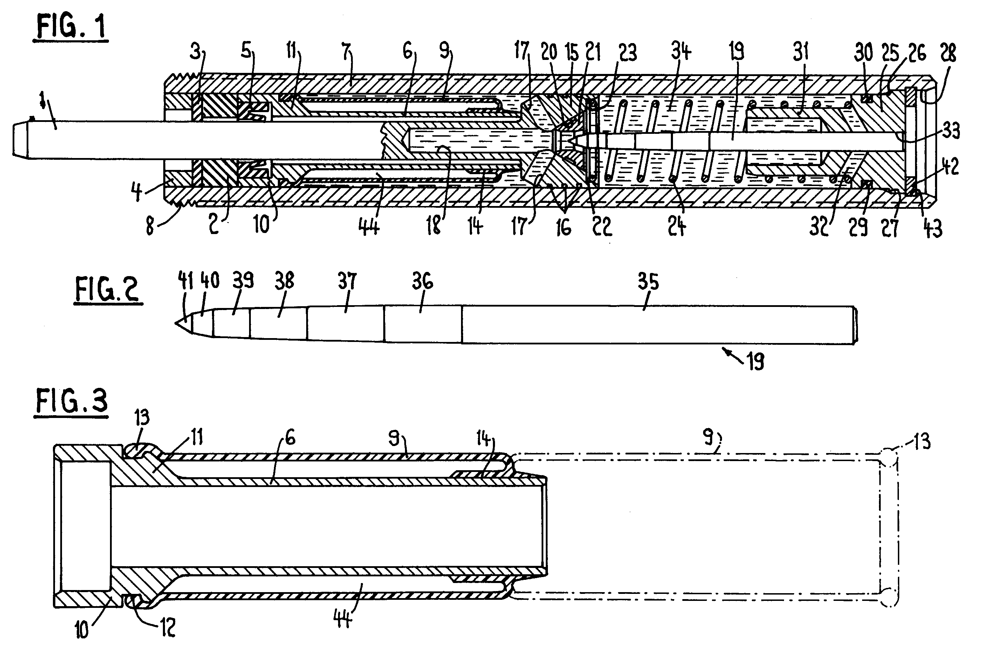

Im Aufbau des hydraulischen Stossdämpfers gemäss Figur 1 erkennt man die Kolbenstange 1, die durch die Führungsbüche 2 geführt ist. Vor der Führungsbüchse befindet sich ein Abstreifer 3 aus Kunststoff, der seinerseits durch einen Einpressring 4 gehalten ist. Auf der anderen Seite der Führungsbüchse schliesst sich eine sogenannte Lippendichtung 5 an, die an einem Membranträger 6 anliegt und diesen gegenüber der gleitenden Kolbenstange abdichtet. Der Membranträger 6 ist im Gehäuse 7 eingepresst, wobei das Gehäuse auf seiner ganzen Länge ein Aussengewinde 8 aufweist.

Am Membranträger 6 ist gemäss Figur 3 die Kompensationsmembrane 9 befestigt, die aus einem geeigneten Kunststoff, beispielsweise aus einem Nitrilkautschuk besteht. Der Membranträger enthält ein kolbenartiges Stück 10, an welchem er im Gehäuse eingepresst wird und daher ein dem Innendurchmesser des Gehäuses entsprechenden Aussendurchmesser aufweist, welchem Stück sich eine in Absatz 11 umlaufende Nut 12 anschliesst, in die das verdickte Ende 13 der Membrane anliegt. Die Membrane 9 ist an ihrem anderen Ende 14 auf den Membranträger aufvulkanisiert, wobei dies in der strich-punktiert eingezeichneten Stellung geschieht, woraufhin die Membrane umgestülpt und in die endgültige Stellung gebracht wird. Nach dem Aufvulkanisieren der Membrane und Herumstülpen derselben kann der Membranträger mit der Membrane in den Zylinder eingepresst werden.

Am anderen Ende der Kolbenstange 1 befindet sich der Kolben 15 mit drei Kolbennuten 16, wobei zwei schräg nach hinten verlaufende Bohrungen 17 den Kolben durchsetzen, durch die das Oel während dem Hineinstossen des Kolbens entweicht und das zu kompensierende Volumen ergibt. Die Bohrung 18 am Kolbenstangenende weist eine derartige Länge auf, dass die Drosselnadel den ganzen Weg der Kolbenstange hineingleiten kann. Der Kolben 15 weist eine konische Innenbohrung 20 auf, in welche eine konische Drosselblende 21 eingesetzt werden kann, die durch eine dreieckförmige Feder 22 gesichert wird. Dabei liegt die Feder 22 auf einem Absatz 23 im Kolbenende, während die Oberkante der Drosselblende nicht ganz bis zur Dreiecksfeder reicht, so dass das Oel beim Hinausgleiten der Kolbenstange nicht nur durch die Oeffnung der Drosselblende fliesst, sondern auch diese etwas vom Sitz abgehoben wird und das Oel seitlich zurückströmen kann. Somit wirkt die Drosselblende auch als Rückschlagventil. Auf der Feder 22 stützt sich das eine Ende einer Druckfeder 24 ab, während sich deren anderes Ende am Nadelhalter 25 abstützt.

Der Nadelhalter 25 weist an seinem aussenseitigen Ende einen Absatz 26 auf, dem ein Absatz 27 in der vergrösserten Bohrung 28 im zylindrischen Gehäuse 7 entspricht. Im abgesetzten Teil des Nadelhalters befindet sich eine Nut 29, in der ein O-Ring 30 angebracht ist. Dem abgesetzten Teil im Nadelhalter schliesst sich ein Hülsenteil 31 an, wobei am Uebergang zwischen dem abgesetzten und dem Hülsenteil schräg nach innen verlaufende Bohrungen 32 für die Entlüftung während der Montage angeordnet sind. Wie aus Figur 1 ersichtlich, ist die Druckfeder 24 über den Hülsenteil 31 gestreift. Wie ebenfalls aus Figur 1 ersichtlich, ist die Drosselnadel in einer Bohrung 33 im Nadelhalter eingelassen, doch kann man ebenfalls daraus ersehen, dass die Nadel nicht starr mit dem Nadelhalter verbunden ist, so dass die Gefahr eines Bruchs der Drosselnadel dadurch verhindert wird. Im Gehäuse befindet sich ein dazu geeignetes Oel 34, das an sich bekannt und frei auf dem Markt erhältlich ist.

Der Nadelhalter 25 wird durch einen Sicherungsring 42 gehalten, der in einer Nut 43 in der erweiterten Bohrung 28 des Gehäuses sitzt.

Wesentlich für ein einwandfreies, genau reproduzierbares und schonendes Dämpfen der Kolbenstange, respektive des sie betätigenden Armes des Automaten ist die Drosselung der Stossbewegung, und es wurde erkannt, dass eine erhebliche Verbesserung dieser Eigenschaften durch eine spezielle Formgebung des aktiven Teils der Drosselnadel erzielt werden kann. In Figur 2 ist im vergrösserten Massstab eine solche Drosselnadel wiedergegeben. Die Drosselnadel 19 weist ein zylindrisches Teil 35 auf, das teilweise im Nadelhalter eingelassen ist oder in dessen Hülsenteil angeordnet ist. Etwas nach der Mitte ist eine erste konische Stufe 36 angeschliffen, dessen Abweichung vom durch die Fortsetzung des zylindrischen Teils gedachten zylindrischen Mantel etwa 30 - 50' beträgt, vorzugsweise 35 - 45'. Dem schliesst sich eine zweite konische Stufe 37 an, dessen Abweichung vom zylindrischen Mantel 50 - 70', vorzugsweise 55 - 65' beträgt. Daran schliesst sich eine dritte konische Stufe 38 an mit einer Abweichung vom Zylindermantel zwischen 70 und 90', vorzugsweise 75 - 85'. Daran schliesst sich ein weiterer konischer abgesetzter Teil 39 an, dessen Abweichung vom zylindrischen Mantel 100 - 140', vorzugsweise 110 - 130' beträgt. Dem folgt ein stärker sich verjüngender Teil 40 dessen Abweichung vom zylindrischen Mantel 9 - 15°, vorzugsweise 11 - 13° beträgt, dem sich eine Spitze 41 anschliesst, deren Oeffnungswinkel 60° beträgt. Durch diese Abstufungen, insbesondere durch die Stufen 36 - 39, kann eine stetige und überaus günstige, das heisst sanfte jedoch wirkungsvolle Dämpfung erzielt werden.

In der in Figur 1 gezeigten Stellung der Kolbenstange ist die Druckfeder 24 nur schwach beaufschlagt und der Oeldruck ist überall ausgeglichen. Beim Hineinstossen der Kolbenstange strömt das kompensierte Oelvolumen durch die Bohrungen 17 und gelangt zwischen die Zylinderinnenwand und Kompensationsmembrane 9. Diese wölbt sich dadurch nur geringfügig in den Innenraum 44 aus, wodurch ihre Langlebigkeit gewährleistet wird. Das Zurückweichen der Membrane wird durch die beim Hineinwölben komprimierte Luft besorgt, die sich dann wieder entspannt, falls der Oeldruck nachlässt. Eine solche Biegung der Membrane beansprucht diese sehr viel weniger als das Hin- und Zurückrollen der vorbekannten Rollmembrane. Ausserdem ermöglicht die Befestigung der Membrane am festen Membranträger eine einwandfreie Abdichtung des Hydrauliköles sowohl von innen nach aussen als auch von aussen nach innen.

## Patentansprüche

1. Hydraulischer Stossdämpfer für die Industrie, mit einer Kolbenstange (1), an der eine Drosselblende (21) angebracht ist, die mit einer Drosselnadel (19) zusammenwirkt welche einen abgestuften von der freien Spitze bis zum befestigbaren zylindrischen Teil (35) zunehmenden Querschnitt aufweist, dadurch gekennzeichnet, dass die Drosselnadel (19) über ihre ganze mit der Drosselblende (21) wirksame Lange (41 - 36) konisch ausgebildet ist, wobei die Konizität von der Spitze (41) an abnimmt.

2. Stossdämpfer nach Anspruch 1, dadurch gekennzeichnet, dass die Drosselnadel (19) abgesehen von ihrer Spitze (41) mindestens drei konische Abstufungen (36 - 40) aufweist.

3. Stossdämpfer nach Anspruch 2, dadurch gekennzeichnet, dass die Drosselnadel (19) fünf konische Abstufungen (36 - 40) aufweist, die insgesamt einen vom von der Fortsetzung des zylindrischen Teil (35) gebildeten Zylindermantel abweichenden Winkel von 15° aufweisen.

4. Stossdämpfer nach Anspruch 3, dadurch gekennzeichnet, dass die erste Abstufung (36) um 30 - 50', die zweite (37) um 50 - 70', die dritte (38) um 70 - 90', die vierte (39) um 100 - 140' und die fünfte (40) um 9 - 15° vom Zylindermantel abweicht.

5. Stossdämpfer nach einem der Ansprüche 1 bis 4, dadurch gekennzeichnet, dass ein Gehäuse (7) des Stossdämpfers durch einen hülsenartigen Nadelhalter (25) abgeschlossen ist, in dessen Bodenteil die Drosselnadel (19) eingelassen ist und der ein anschliessendes abgesetztes, Hülsenteil (31) aufweist das die Drosselnadel mit Spiel umschliesst und um den eine Druckfeder (24) angeordnet ist, dessen anderes Ende sich am Kolben (15) der Kolbenstange (1) abstützt.

6. Stossdämpfer nach Anspruch 5, dadurch gekennzeichnet, dass zwischen dem Boden- und dem Hülsenteil des Nadelhalters schräg gegen das Kolbenstangenende gerichtete Entlüftungsbohrungen (32) angeordnet sind.

7. Stossdämpfer nach einem der Ansprüche 1 bis 6, dadurch gekennzeichnet, dass der Nadelhalterboden durch einen Sicherungsring (42) gehalten ist, der in einer Nut (43) im Gehäuse liegt und dass die Kolbenstange durch eine Führungsbüchse (2) geführt ist.

8. Stossdämpfer nach Anspruch 7, dadurch gekennzeichnet, dass zwischen der Führungsbüchse und einem sichernden Einpressring (4) ein Abstreifring (3) aus Kunststoff angeordnet ist.

9. Stossdämpfer nach einem der Ansprüche 1 bis 8, dadurch gekennzeichnet, das die Drosselblende (21) beweglich angeordnet und durch eine dreieckförmige Feder (22) gesichert ist und als Teil eines Rückschlagventils wirkt wobei die Drosselblende (21) konische Form aufweist und in eine konische Innenbohrung (20) des Kolbens (15) eingesetzt ist.

## Claims

1. A hydraulic shock absorber for the industry, comprising a piston rod (1) to which a throttle aperture (21) is attached which cooperates with a throttle needle (19) having a graduated cross-section which increases from its free point towards the attachable cylindrical portion (35), characterised in that said throttle needle (19) has a conical shape over its entire length (41- 36) which is operative in conjunction with said throttle aperture (21), the amount of taper decreasing from said point (41).

2. A shock absorber according to claim 1, characterised in that said throttle needle (19) comprises, besides its point (41), at least three conical gradations (36 - 40).

3. A shock absorber according to claim 2, characterised in that said throttle needle (19) comprises five conical gradations (36 - 40) which deviate from the continuation of the surface area formed by said cylindrical portion (35) at an overall angle of 15°.

4. A shock absorber according to claim 3, characterised in that the first gradation (36) deviates from the cylinder surface by 30 - 50', the second one (37) by 50 - 70', the third one (38) by 70 - 90', the fourth one (39) by 100 - 140', and the fifth one (40) by 9 - 15°.

5. A shock absorber according to any one of claims 1 to 4, characterised in that a housing (7) of the shock absorber is sealed by a sleeve-shaped needle holder (25) in the base of which said throttle needle (19) is inserted and which is followed by a shouldered sleeve portion which encloses said throttle needle with an allowance and which is surrounded by a pressure spring (24) whose other end rests against the piston (15) of said piston rod (1).

6. A shock absorber according to claim 5, characterised in that ventilation bores (32) which are inclined and directed towards the end of said piston rod are provided between said base and said sleeve portion of said needle holder.

7. A shock absorber according to any one of claims 1 to 6, characterised in that the base of said needle holder is held by a retaining ring (42) which is accommodated in a groove (43) of said housing, and in that said piston rod is guided by a guide bush (2).

8. A shock absorber according to claim 7, characterised in that a plastics oil ring (3) is provided between said guide bush and a pressed-in securing ring (4).

9. A shock absorber according to any one of claims 1 to 8, characterised in that said throttle aperture (21) is displaceable and is secured by a triangular spring (22) and acts as a part of a non-return valve, said throttle aperture (21) having a conical form an being inserted in a conical bore (20) on the inside of the piston (15).

## Revendications

1. Amortisseur hydraulique pour l'industrie, comprenant une tige de piston (1) à laquelle est attachée une chicane coopérant avec une aiguille d'étranglement (19) présentant une coupe transversale étagée qui augmente de la pointe libre jusqu'à la partie cylindrique (35) attachable, caractérisé en ce que ladite aiguille d'étranglement est de forme conique sur toute sa longueur efficace avec la chicane, la conicité étant décroissante à partir de la pointe (41).

2. Amortisseur selon la revendication 1, caractérisé en ce que ladite aiguille d'étranglement (19) présente au moins trois gradins coniques en plus de sa pointe (41).

3. Amortisseur selon la revendication 2, caractérise en ce que ladite aiguille d'étranglement (19) présente cinq gradins coniques dont l'ensemble présente un angle qui dévie de l'enveloppe cylindrique formée par la continuation de la partie cylindrique (35) à un angle de 15°.

4. Amortisseur selon la revendication 3, caractérisé en ce que le premier gradin (36) dévie de 30 - 50' de ladite enveloppe cylindrique, le deuxième (37) de 50 - 70', le troisième (38) de 70 - 90', la quatrième (39) de 100 - 140', et la cinquième (40) de 9 - 15°.

5. Amortisseur selon l'une quelconque des revendications 1 à 4, caractérisé en ce qu'un boîtier (7) de l'amortisseur est fermé par un porte-aiguille (25) en forme de douille dans la base duquel est emboîtée l'aiguille d'étranglement (19) et qui est prolongé par une partie en douille (31) étagée qui entoure l'aiguille d'étranglement avec jeu et autour de laquelle est disposé un ressort a compression (24) dont l'autre extrémité repose sur le piston (15) de ladite tige de piston (1).

6. Amortisseur selon la revendication 5, caractérisé en ce que des alésages de ventilation (32) inclinés vers l'extrémité de la tige de piston sont pratiquées entre la base et la partie en douille dudit porte-aiguille.

7. Amortisseur selon l'une quelconque des revendications 1 à 6, caractérisé en ce que la base dudit porte-aiguille est retenue par un circlip (42) placé dans une rainure (43) du boîtier, et que la tige de piston est guidée par une douille de guidage (2).

8. Amortisseur selon la revendication 7, caractérisé en ce qu'une bague gratte-huile (3) est disposée entre ladite douille de guidage et une bague intérieure (4) de retenue.

9. Amortisseur selon l'une quelconque des revendications 1 à 8, caractérisé en ce que la chicane (21) est déplaçable et retenue par un ressort triangulaire (22) et agit comme partie d'une soupape de retenue, la chicane (21) étant en forme conique et insérée dans un alésage intérieur (20) conique du piston (15).
